# EUROPEAN PATENT SPECIFICATION

(11) **EP 1 457 579 B1**
(45) Date of publication and mention of the grant of the patent: **07.05.2014**
(21) Application number: 03251597.5
(22) Date of filing: 14.03.2003
(51) Int. Cl.: C22C 19/00, C22C 27/00

(54) **Materials for protection of superalloy substrates at high temperature, articles made therefrom, and method for protecting substrates**
Materialien zum Schutz von Substraten aus Superlegierungen bei hohen Temperaturen, Artikel daraus und Methode zum Schutz von Substraten
Matériaux pour la protection des substrats à haute température, articles constitues de celles-ci et méthode pour la protection des substrates

(43) Date of publication of application: 15.09.2004
(73) Proprietor: GENERAL ELECTRIC COMPANY, Schenectady, NY 12345 (US)
(72) Inventor: Zhao, Ji-Cheng, Latham, New York 12110 (US); Jackson, Melvin Robert, Niskayuna, New York 12309 (US); Grylls, Richard John, Alburquerque, New Mexico 87114 (US); Darolia, Ramgopal, West Chester, Ohio 45069 (US)
(74) Representative: Szary, Anne Catherine

(56) References cited:
- US-A- 4 061 495
- US-B1- 6 306 524
- US-B1- 6 455 167

## Description

This invention relates to high-temperature materials. More particularly, this invention relates to coatings to protect substrates in high-temperature, oxidative environments, such as, for example, gas turbine engines. This invention also relates to methods for protecting substrates in these environments.

In a gas turbine engine, compressed air is mixed with fuel in a combustor and ignited, generating a flow of hot combustion gases from the combustor to the turbine stages via a transition piece, also called a "duct." Upon entering the turbine stage portion of the engine, the hot gas is driven through one or more turbine stages that extract energy from the gas, producing output power. Each turbine stage includes a stator nozzle having vanes which direct the combustion gases against a corresponding row of turbine blades extending radically outwardly from a supporting rotor disk. The vanes and blades are subject to substantial heat load, and, because the efficiency of a gas turbine engine is proportional to gas temperature, the continuous demand for efficiency translates to a demand for airfoils that are capable of withstanding higher temperatures for longer service times.

Gas turbine components such as, for example, vanes, blades, combustors, and transition pieces, are usually made of superalloys and are often cooled by means of internal air-cooling chambers and the addition of coatings, including thermal barrier coatings (TBC's) and environmental coatings, to their external surfaces. The term "superalloy" is usually intended to embrace iron (Fe)-, cobalt (Co)-, or nickel (Ni)-based alloys, which include one or more other elements including such non-limiting examples as aluminum (Al), tungsten (W), molybdenum (Mo), rhenium (Re), tantalum (Ta), and titanium (Ti). TBC's comprise at least a layer of thermally insulating ceramic, often yttria-stabilized zirconia, and often include one or more layers of metal-based, oxidation-resistant materials ("environmental coatings") underlying the insulating ceramic for enhanced protection of the airfoil. Environmental coatings are also frequently used without a TBC ceramic topcoat.

Conventional coatings used on components exposed to the hot gases of combustion in gas turbine engines for both environmental protection and as bond coats in TBC systems include both diffusion aluminides and MCrAl(X) coatings. The term "aluminides" encompasses a wide variety of coatings comprising aluminide compounds of various chemical compositions. For example, nickel aluminide, NiAl, is often grown as an outer coating on a nickel-based superalloy by exposing the superalloy substrate to an aluminum-rich environment at elevated temperatures. The aluminum diffuses into the substrate and combines with the nickel to form a coating of NiAl on the outer surface. A platinum-containing nickel aluminide (Pt--NiAl) coating is often formed by electroplating platinum over the nickel-base substrate to a predetermined thickness, followed by exposing the platinum-coated substrate to an aluminum-rich environment at elevated temperatures. In addition to aluminide coatings, MCrAl(X) coatings, where M is at least one of Ni, Co, and Fe, and wherein X is at least one of yttrium (Y), tantalum (Ta), silicon (Si), hafnium (Hf), titanium (Ti), zirconium (Zr), boron (B), carbon (C), are commonly used as bondcoats for a TBC system and as environmental coatings. MCrAl(X) coatings are suitable for application by any of a number of processes, including plasma spraying, high-velocity oxy-fuel (HVOF) spraying, and physical and chemical vapor deposition, as non-limiting examples.

The coatings noted above comprise relatively high amounts of Al with respect to the superalloy substrate, while the superalloy substrate is relatively rich in certain elements, such as, for example, Co and refractory elements such as W, Re, Ta, Mo, and Ti, that are not present or are present in relatively small amounts in the coating. The concentration gradient in Al and other elements that results when the coating is deposited directly on the superalloy substrate causes solid-state diffusion to occur across the substrate/coating interface when the substrate is exposed to high temperatures, such as those found in gas turbine engines during service. The migration of elements across the interface alters the chemical composition and microstructure of both the coating and the substrate in regions adjacent to the interface ("diffusion zones"), resulting in generally deleterious effects on the properties of both the coating and the substrate. For example, migration of Al out of the diffusion zone of the coating detracts from its effectiveness as an oxidation-resistant material, while the accumulation of Al in the diffusion zone of the substrate converts the γ-γ' superalloy structure into one with drastically reduced load-carrying capability. As time passes, and more material migrates across the interface, the size of the diffusion zones in both the coating and the substrate increases ("diffusion zone growth"), leading to significant degradation in the performance of a coated superalloy component.

One solution to the problem of diffusion zone growth in gas turbine engine components is the use of a diffusion barrier layer, interposed between the substrate and the environmental coating, as set forth in U.S. Patent No. 6,306,524. In part, '524 sets forth certain alloys of ruthenium (Ru) with Ni, Co, Cr and mixtures thereof that can be effective as barriers to the diffusion of Al and other elements, thereby prolonging the life of coated gas turbine engine components by significantly inhibiting the formation and growth of diffusion zones during service.

Although effective as diffusion barriers, some of the alloys set forth in '524 lack the oxidation resistance needed for optimum performance in state-of-the-art gas turbine engines. Therefore, there is a need to provide material compositions and coating systems with high oxidation resistance and high resistance to solid-state diffusion of Al and other elements found in superalloys. Embodiments of the present invention address this need.

The first embodiment is an alloy for use in a high-temperature, oxidative environment, comprising, in atomic percent: from 20% to 80% ruthenium (Ru), from 2% to 15% aluminum (Al), up to 15% chromium (Cr); and the balance comprising at least one of nickel (Ni), cobalt (Co), and mixtures thereof.

A second embodiment is a protective coating system for protecting an article from a high-temperature, oxidative environment. The protective coating system comprises a diffusion barrier layer comprising the alloy in atomic percent, from 20% to 80% ruthenium (Ru), from 2% to 15% aluminum (Al), up to 15% chromium (Cr), and the balance comprising at least one of nickel (Ni), cobalt (Co), and mixtures thereof;

A third embodiment is an article for use in a high-temperature, oxidative environment. The article comprises a substrate and a diffusion barrier layer disposed on the substrate. The diffusion barrier layer comprises the alloy of the first embodiment.

A fourth embodiment is a method for protecting an article from exposure to a high-temperature, oxidative environment. The method comprises providing a substrate, and disposing a diffusion barrier layer on said substrate. The diffusion barrier layer comprises the above alloy of the first embodiment.

The invention will now be described in greater detail, by way of example, with reference to the drawings, in which:-
Figure 1 is a schematic diagram of the various forms of diffusion zone growth; and
Figure 2 illustrates an article comprising a protective coating system according to embodiments of the present invention.

The discussion herein employs examples taken from the gas turbine industry, particularly the portions of the gas turbine industry concerned with the design, manufacture, operation, and repair of aircraft engines and power generation turbines. However, the scope of the invention is not limited to only these specific industries, as the embodiments of the present invention are applicable to many and various applications that require materials resistant to high temperature and aggressive environments. Unless otherwise noted, the temperature range of interest where statements and comparisons are made concerning material properties is from 950°C to 1300°C. The term "high temperature" as used herein refers to temperatures above about 950°C.

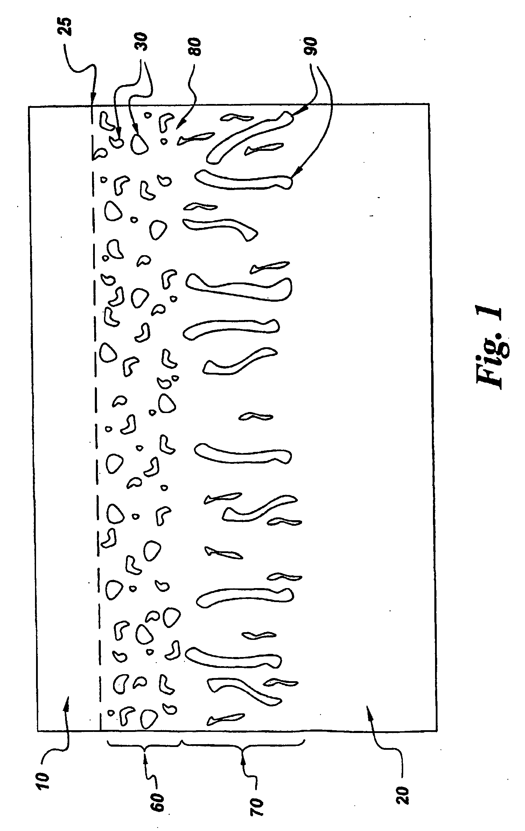

Referring to Figure 1, interdiffusion between an environmental coating 10 and superalloy substrate 20 drives a transformation in the substrate diffusion zone, wherein the formation and growth of topologically close-packed (TCP) phases 30 become thermodynamically favored over that of the original γ matrix phase and γ' precipitate phase present in the superalloy 20 prior to reaction with the coating 10. The region 60 corresponding to the above situation is referred to as the "primary diffusion zone" (PDZ). In many state-of-the-art superalloys, especially those alloys with significant additions of refractory elements such as, for example, Re, W, and Hf, a second, distinct zone of transformation is observed. This so-called "secondary reaction zone" (SRZ) 70 comprises a γ' matrix phase 80 with needle-shaped precipitate phases 90 of γ and TCP phase. Diffusion of Al and Cr into the superalloy 20 from the coating 10 has been shown to promote the formation of TCP phases and SRZ growth. The formation of PDZ and SRZ in coated superalloys degrades the properties of the superalloy by reducing the effective load-bearing cross-section, that is, the cross-sectional area fraction of γ-γ' microstructure, of the alloy.

Embodiments of the present invention address the problem of PDZ and SRZ formation in superalloys, as well as the problem of providing a material that possesses excellent diffusion barrier properties in addition to substantial resistance to oxidation. Oxidation resistance allows the material to resist degradation during service thermal exposures, thereby extending the life of the material over that generally observed for current alloys. The term "diffusion barrier" is used herein to refer to a material that, when disposed as a coating layer 10 over a substrate 20 such that a concentration gradient exists across the coating/substrate interface 25 for at least one of Al and Cr, reduces the migration of Al and Cr across the interface 25 by a factor of at least 2 relative to the amount of migration, as measured by the thickness of the diffusion zone, observed under similar conditions (e.g., similar concentration gradients temperatures, and times) where the diffusion barrier 10 is absent. Advantageously, diffusion barriers as set forth in embodiments of the present invention also provide a similar degree of reduction in the migration of elements, such as, for example, W, Re, Ti, Mo, Ta, Hf, and Co, from the superalloy into the coating. The diffusion barrier materials of the present invention are also relatively thermodynamically and kinetically stable at high temperatures, such as, for example, the service temperatures encountered by the metal components of a gas turbine engine.

The first embodiment of the present invention sets forth an alloy for use in a high temperature, oxidative environment. This alloy comprises at Ru, Cr, Al, Ni, and Co. Ru provides good diffusion barrier properties and oxidation resistance, while Al and Cr further enhance the oxidation resistance. Ni and Co additions to the alloy enhance the compatibility of the material with superalloy substrates, in terms of properties such as, for example, thermal expansion coefficient. The specific elements and their amounts present in particular alloys will depend on various factors. These include: the particular composition of the substrate and any coating applied over the barrier coating; the intended end use for the article (e.g., a turbine part); the expected temperature and temperature patterns to which the article itself will be subjected; and the desired service life of the barrier coating.

The alloy of the present invention comprises, in atomic percent, from 20% to 80% ruthenium (Ru), from 2% to 15% aluminum (Al), up to 15% chromium (Cr), and the balance comprising at least one of nickel (Ni), cobalt (Co), and mixtures thereof. This alloy is referred to herein as "Composition 1." The term "balance" as used herein is used as is common in the art to refer to that amount needed to make up the difference between 100% and the sum of all other alloy constituents. Those skilled in the art will appreciate that a "balance" as used herein can be any number from 0% to 100%, depending on the magnitude of the sum of the other alloy constituents. In particular embodiments of this alloy, the alloy comprises, in atomic percent, from 30% to 80% Ru, from 4% to 10% Al, from 2% to 12% Cr, and the balance comprising at least one of nickel (Ni), cobalt (Co), and mixtures thereof. More specific embodiments of this alloy comprise, in atomic percent, 40% to 60% Ru, 4% to 8% Al, 5% to 12% Cr, and the balance comprising at least one of nickel (Ni), cobalt (Co), and mixtures thereof. This alloy is relatively ductile and it is especially suited for applications where strain tolerance of the coating is critical.

Another embodiment of the present invention is a protective coating system for protecting an article from a high-temperature, oxidative environment. The protective coating system comprises a diffusion barrier layer comprising the alloy Composition 1, In certain embodiments, the thickness of the diffusion barrier layer is from 5 to 100 microns thick.

As mentioned above, the diffusion barrier layer is used to protect an alloy substrate from the damaging effects of PDZ and SRZ formation and growth. In certain embodiments, other coating layers are included to enhance the overall effectiveness of the protective coating system. For example, in some embodiments, the protective coating system further comprises a thermal barrier coating (TBC) disposed over the diffusion barrier layer. The TBC, which in certain embodiments is at least 100 microns thick, is used to afford enhanced thermal resistance to the surface of the protective coating system, thereby lowering the effective exposure temperature to the coating system and the underlying substrate. Alternatively, the protective coating system, in some embodiments, further comprises a layer of oxidation-resistant material disposed over the diffusion barrier layer. The term "oxidation-resistant material" is used herein to refer to a material having an oxidation resistance that is higher than that of nickel-based superalloys. In certain embodiments, the layer of oxidation-resistant material has a thickness in the range from 25 microns to 100 microns. In some embodiments, the oxidation-resistant material comprises aluminum, which generally provides oxidation resistance to underlying metal by forming a dense, adherent, protective layer of aluminum oxide on an exposed surface. For example, in certain embodiments, the oxidation-resistant material comprises an aluminide, and in particular embodiments of this type, the oxidation-resistant material further comprises platinum. Non-limiting examples of possible aluminide materials include NiAl and Pt-NiAl, as described above. In other embodiments, the oxidation-resistant material comprises a material of general formula MCrAl(X), wherein M is at least one of nickel, cobalt, and iron, and wherein X is at least one of yttrium (Y), tantalum (Ta), silicon (Si), hafnium (Hf), titanium (Ti), zirconium (Zr), boron (B), carbon (C). The addition of the oxidation-resistant layer to the protective coating system of the present invention further enhances the ability of the coating system to avoid degradation by oxidation during exposure to high temperature gas, thereby extending the life expectancy of the protective coating system.

In a further embodiment, the layer of oxidation-resistant material is disposed between the diffusion barrier layer and a TBC, combining the advantages of these two additional materials to enhance the overall performance of the protective coating system.

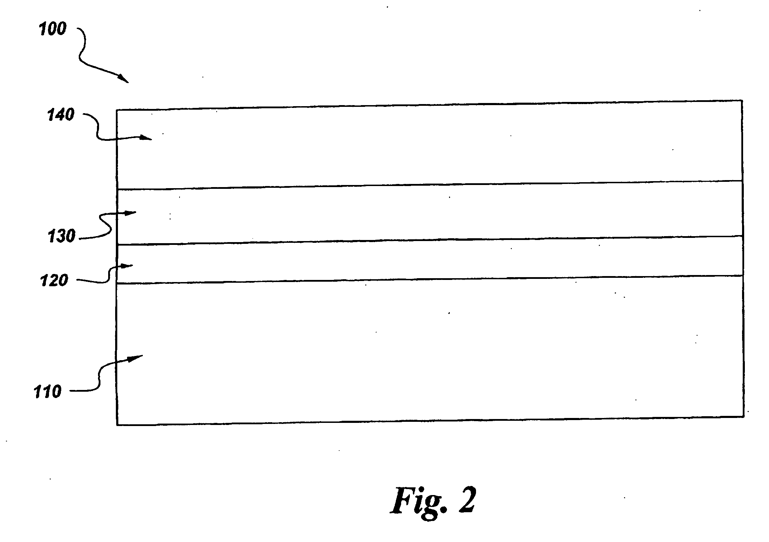

Other embodiments of the present invention include an article for use in a high-temperature oxidative environment. Referring to Figure 2, the article 100 comprises a substrate 110; and a diffusion barrier layer 120 disposed on the substrate 110, the diffusion barrier layer 120 comprising the alloy Composition 1. The substrate 110 is a superalloy in some embodiments, and in particular embodiments the superalloy is a nickel-based superalloy comprising at least one refractory metal selected from the group consisting of tungsten, rhenium, tantalum, hafnium, molybdenum, niobium, and zirconium. As described above, the presence of such elements promotes the susceptibility of the superalloy to SRZ growth if diffusion processes accumulate Al and Cr in the diffusion zone of the superalloy; thus the need for the diffusion barrier coatings as described herein. In certain embodiments, the article 100 further comprises a layer of oxidation-resistant material 130 disposed over the diffusion barrier layer 120. Alternatives for the oxidation-resistant material are the same as those set forth above for the protective coating system. A TBC 140 is disposed over the layer of oxidation-resistant material 130 in certain embodiments for which enhanced thermal protection is desired.

In particular embodiments, the substrate 110 further comprises a gas turbine engine component, and in specific embodiments the gas turbine engine component is a component selected from the group consisting of a turbine blade, a vane, a transition piece, and a combustor.

A further embodiment of the present invention is a method for protecting an article from exposure to a high-temperature, oxidative environment, the method comprising providing a substrate, and disposing a diffusion barrier layer on the substrate, the diffusion barrier layer comprising the alloy Composition 1. As in embodiments described above, the substrate, in certain embodiments, comprises a superalloy that comprises at least one of the aforementioned refractory metals. In some applications, providing the substrate comprises providing a gas turbine engine component, which for certain embodiments is a component selected from the alternatives described above.

For certain embodiments, the method further comprises disposing a layer of oxidation-resistant material over the diffusion barrier layer. In particular embodiments where additional thermal protection is desirable, the method further comprises disposing a thermal barrier coating over said layer of oxidation-resistant material.

The alloy set forth herein as the first embodiment of the present invention is made using any of the various traditional methods of metal production and forming. Traditional casting, powder metallurgical processing, directional solidification, and single-crystal solidification are non-limiting examples of methods suitable for forming ingots of these alloys. Thermal and thermo-mechanical processing techniques common in the art for the formation of other alloys are suitable for use in manufacturing the alloys of the present invention. Several embodiments of the present invention pertain to the use of coatings of at least one of the following: diffusion barrier alloys, oxidation-resistant materials, and thermal barrier materials. Each of these coatings, as envisioned for use in embodiments of the present invention, is suitable to be manufactured using any of several coating techniques, including, for example, diffusion coating techniques, physical vapor deposition, chemical vapor deposition, plasma spraying, and HVOF spraying. Oxidation-resistant materials such as aluminides and MCrAl(X) coatings may be deposited by any of the techniques commonly used in the art for the production of these coatings.

Additionally, for certain embodiments of the present invention the diffusion barrier layer is disposed by a process comprising disposing a layer of ruthenium (Ru) on the substrate, and heating the substrate to react the Ru with the substrate to form the diffusion barrier layer. For example, a layer of Ru is deposited onto the superalloy substrate by any suitable deposition process, such as, for example, electroplating, sputtering, electron-beam physical vapor deposition, or ion plasma deposition. Oxidation-resistant material comprising aluminum is then disposed over the layer of Ru, and then the coated substrate is heated at a suitable temperature, such as, for example, about 1200°C for a suitable reaction time, such as, for example, greater than about 30 minutes. During heating, Ni and Cr from the substrate, along with Al from the layer of oxidation-resistant material will diffuse into the layer of Ru and react with it to form a composition according to embodiments of the present invention.

The following example is presented to demonstrate exemplary results obtained with one alloy of the present invention and is not to be considered as limiting the scope of the present invention in any way.

An alloy with a composition according to embodiments of the present invention was manufactured by arc-melting to form a target suitable for use in an ion plasma deposition (IPD) apparatus. The alloy had a composition, in atomic percent, of about 43% Ni, about 43%Ru, about 9% Cr, about 5% Al, plus incidental impurities. The target was then used in an IPD process to deposit a diffusion barrier layer of about 15 microns thickness onto a first substrate button, 25 mm in diameter and comprising a nickel-based superalloy. A second coating layer of aluminum-rich material was then deposited onto this button at a thickness of 40 microns over the diffusion barrier layer. The aluminum-rich material had a composition, in atomic percent, of about 54% Ni, about 40% Al, about 6% Cr, plus incidental impurities. The resulting substrate with two coating layers is herein referred to as "Specimen A." For comparison, the aluminum-rich material was also deposited at a thickness of about 40 microns directly onto a second substrate of the same size and composition as used to make Specimen A, without an intervening diffusion barrier layer. The resulting substrate with only the Al-rich material deposited onto the substrate button is herein referred to as "Specimen B." Specimens A and B were then heat treated at about 1100°C for about 400 hours, then removed from the heat, cross-sectioned, and metallographically examined for evidence of diffusion zone formation. Specimen B, the specimen without the diffusion barrier layer, had a diffusion zone (including PDZ zone and SRZ zone) of 180 micron thickness, whereas Specimen A, the specimen with the diffusion barrier layer according to embodiments of the present invention had a diffusion zone of 10 microns and was free from SRZ formation.

## Claims

1. An alloy for use in a high-temperature, oxidative environment, consisting of, in atomic percent:
from 20% to 80% ruthenium (Ru);
from 2% to 15% aluminum (Al);
up to 15% chromium (Cr); and
the balance consisting of at least one of nickel (Ni), cobalt (Co), and mixtures thereof.

2. The alloy of claim 1, wherein said alloy consists of, in atomic percent:
from 30% to 80% Ru;
from 4% to 10% Al;
from 2% to 12% Cr; and
the balance consisting of at least one of nickel (Ni), cobalt (Co), and mixtures thereof.

3. A protective coating system for protecting an article (100) from a high-temperature, oxidative environment, said protective coating system comprising:
a diffusion barrier layer (120) comprising an alloy consisting of, in atomic percent, from 20% to 80% ruthenium (Ru), from 2% to 15% aluminum (Al), up to 15% chromium (Cr), and the balance consisting of at least one of nickel (Ni), cobalt (Co), and mixtures thereof.

4. An article (100) for use in a high-temperature, oxidative environment, comprising:
a substrate (110); and
a diffusion barrier layer (120) disposed on said substrate (110), said diffusion barrier layer (120) comprising an alloy consisting of, in atomic percent, from 20% to 80% ruthenium (Ru), from 2% to 15% aluminum (Al), up to 15% chromium (Cr), and the balance consisting of at least one of nickel (Ni), cobalt (Co), and mixtures thereof.

5. A method for protecting an article (100) from exposure to a high-temperature, oxidative environment, said method comprising:
providing a substrate (110); and
disposing a diffusion barrier layer (120) on said substrate (110), said diffusion barrier layer (120) comprising an alloy consisting of, in atomic percent, from 20% to 80% ruthenium (Ru), from 2% to 15% aluminum (Al), up to 15% chromium (Cr), and the balance consisting of at least one of nickel (Ni), cobalt (Co), and mixtures thereof.

## Patentansprüche

1. Legierung zur Verwendung in einer oxidativen Hochtemperaturumgebung, welche in Atomprozent angegeben aus Folgendem besteht:
von 20 % bis 80 % Ruthenium (Ru);
von 2 % bis 15 % Aluminium (Al);
bis zu 15 % Chrom (Cr); und
wobei der Rest aus mindestens einem der Elemente Nickel (Ni), Kobalt (Co) und Mischungen daraus besteht.

2. Legierung nach Anspruch 1, bei welcher die Legierung in Atomprozent angegeben aus Folgendem besteht:
von 30 % bis 80 % Ru;
von 4 % bis 10 % Al;
von 2 % bis 12 % Cr; und
wobei der Rest aus mindestens einem der Elemente Nickel (Ni), Kobalt (Co) und Mischungen daraus besteht.

3. Schutzbeschichtungssystem zum Schützen eines Gegenstands (100) vor einer oxidativen Hochtemperaturumgebung, welches Schutzbeschichtungssystem enthält:
eine Diffusionssperrschicht (120), die eine Legierung aufweist, die in Atomprozent aus 20 % bis 80 % Ruthenium (Ru), 2 % bis 15 % Aluminium (Al), bis zu 15 % Chrom (Cr) besteht und wobei der Rest aus mindestens einem der Elemente Nickel (Ni), Kobalt (Co) und Mischungen daraus besteht.

4. Gegenstand (100) zur Verwendung in einer oxidativen Hochtemperaturumgebung, enthaltend:
ein Substrat (110); und
eine auf dem Substrat (110) angeordnete Diffusionssperrschicht (120), welche Diffusionssperrschicht (120) eine Legierung aufweist, die in Atomprozent aus 20 % bis 80 % Ruthenium (Ru), 2 % bis 15 % Aluminium (Al), bis zu 15 % Chrom (Cr) besteht und wobei der Rest aus mindestens einem der Elemente Nickel (Ni), Kobalt (Co) und Mischungen daraus besteht.

5. Verfahren zum Schützen eines Gegenstands (100) vor dem Kontakt mit einer oxidativen Hochtemperaturumgebung, welches Verfahren umfasst:
Bereitstellen eines Substrats (110); und
Anordnen einer Diffusionssperrschicht (120) auf dem Substrat (110), welche Diffusionssperrschicht (120) eine Legierung aufweist, die in Atomprozent aus 20 % bis 80 % Ruthenium (Ru), 2 % bis 15 % Aluminium (Al), bis zu 15 % Chrom (Cr) besteht und wobei der Rest aus mindestens einem der Elemente Nickel (Ni), Kobalt (Co) und Mischungen daraus besteht.

## Revendications

1. Alliage destiné à une utilisation dans un environnement oxydant à haute température, constitué, en pourcentage atomique :
de 20 % à 80 % de ruthénium (Ru) ;
de 2 % à 15 % d'aluminium (Al) ;
jusqu'à 15 % de chrome (Cr) ; et
le complément étant constitué d'au moins un métal parmi le nickel (Ni), le cobalt (Co) et les mélanges de ceux-ci.

2. Alliage selon la revendication 1, dans lequel ledit alliage est constitué, en pourcentage atomique :
de 30 % à 80 % de Ru ;
de 4 % à 10 % d'Al ;
de 2 % à 12 % de Cr ; et
le complément étant constitué d'au moins un métal parmi le nickel (Ni), le cobalt (Co) et les mélanges de ceux-ci.

3. Système de revêtement protecteur pour la protection d'un article (100) contre un environnement oxydant à haute température, ledit système de revêtement protecteur comprenant :
une couche de barrière de diffusion (120) comprenant un alliage constitué, en pourcentage atomique, de 20 % à 80 % de ruthénium (Ru), de 2 % à 15 % d'aluminium (Al), jusqu'à 15 % de chrome (Cr), et le complément étant constitué d'au moins un métal parmi le nickel (Ni), le cobalt (Co) et les mélanges de ceux-ci.

4. Article (100) destiné à une utilisation dans un environnement oxydant à haute température, comprenant :
un substrat (110) ; et
une couche de barrière de diffusion (120) disposée sur ledit substrat (110), ladite couche de barrière de diffusion (120) comprenant un alliage constitué, en pourcentage atomique, de 20 % à 80 % de ruthénium (Ru),
de 2 % à 15 % d'aluminium (Al), jusqu'à 15 % de chrome (Cr), et le complément étant constitué d'au moins un métal parmi le nickel (Ni), le cobalt (Co) et les mélanges de ceux-ci.

5. Procédé de protection d'un article (100) contre une exposition à un environnement oxydant à haute température, ledit procédé comprenant :
la fourniture d'un substrat (110) ; et
le dépôt d'une couche de barrière de diffusion (120) sur ledit substrat (110), ladite couche de barrière de diffusion (120) comprenant un alliage constitué, en pourcentage atomique, de 20 % à 80 % de ruthénium (Ru),
de 2 % à 15 % d'aluminium (Al), jusqu'à 15 % de chrome (Cr), et le complément étant constitué d'au moins un métal parmi le nickel (Ni), le cobalt (Co) et les mélanges de ceux-ci.
